# EUROPÄISCHE PATENTANMELDUNG

(11) **EP 1 153 822 A2**
(43) Veröffentlichungstag der Anmeldung: **14.11.2001**
(21) Anmeldenummer: 01106868.1
(22) Anmeldetag: 20.03.2001
(51) Int. Cl.: B62D 25/08

(54) **Aufbaustruktur für ein Kraftfahrzeug mit vorderen Federbeinaufnahmen**

(30) Priorität: 11.05.2000 DE 10023194
(71) Anmelder: Dr.Ing. h.c.F. Porsche Aktiengesellschaft, 70435 Stuttgart (DE)
(72) Erfinder: Tilsner, Michael, 75446 Wiernsheim (DE); Stahl, Rainer, 71706 Markgröningen (DE); Herntier, Matthias, 75449 Wurmberg (DE)

(57) **Zusammenfassung**

Die Aufbaustruktur des Vorderwagens weist zur Verstärkung der Federbeinaufnahme zwischen einem oberen Haubenträger (2) und einem unteren Längsträger (3) der Fahrzeugplattform eine in Fahrzeugquerrichtung angeordnete Verstärkungskonsole (7) auf, die einen Randbereich eines Aufbaubleches (4) des Radhauses abschließend verstärkt.

## Beschreibung

Die Erfindung betrifft eine Aufbaustruktur für ein Kraftfahrzeug mit vorderen Federbeinaufnahmen in einem domförmig ausgebildeten Aufbaublechteil eines Radhauses nach dem Oberbegriff des Anspruchs 1.

Aus der DE 43 04 920 A1 ist ein Vorderwagen für ein Kraftfahrzeug bekannt, der im Bereich einer Federbeinabstützung zwischen einem Längsträger und einer Radhausversteifung Stützstreben aufweist, die zur Versteifung des Längsträgers gegen crashbedingte Kräfte dienen. Desweiteren ist aus der DE 197 09 349 A1 eine Trägerstruktur für einen Vorderwagen eines Kraftfahrzeugs bekannt, der zwischen einem Längsträger und einem Radhaus einen Radhausträger vorsieht, der den Längsträger gegen ein Abknicken abstützt.

Aufgabe der Erfindung ist es, eine vordere Aufbaustruktur eines Kraftfahrzeugs mit einer verstärkten Federbeinaufnahme zu schaffen, die einfach herzustellen und mit einem Radhaus zu verbinden ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß im Bereich des Radhauses ein Aufbaublechteil für die Abstützung eines Federbeins mittels einer Verstärkungskonsole gebildet wird und diese in vorteilhafter Weise mit dem Aufbaublechteil einen Hohlträger und somit einen Festigkeitsverbund bildet. Damit eine entsprechende Steifigkeit mittels der Verstärkungskonsole erzielt werden kann, erstreckt sich diese in Querrichtung des Fahrzeugs von einem oberen Haubenträger zu einem unteren Längsträger der Fahrzeugplattform. Diese Träger sind bauartbedingt in Querrichtung des Fahrzeugs versetzt zueinander angeordnet, so daß sich über die Verbindung mit dem zurückversetzten Aufbaublechteil des Radhauses eine relativ große Abstützbasis ergibt.

Die Verstärkungskonsole kann U-profilförmig oder winkelförmig ausgebildet sein und weist einen Steg auf, der in Fahrzeuglängsrichtung verläuft, das heißt, die Stegfläche ist etwa parallelliegend zur Fahrzeuglängsmittenebene angeordnet. Am Steg sind entweder zwei abgewinkelte Schenkel oder nur ein abgewinkelter Schenkel vorgesehen.

Vorzugsweise ist die Verstärkungskonsole etwa dreieckförmig ausgeformt und erstreckt sich in einer Einbaulage quer zum Fahrzeug, wobei ein erster etwa vertikaler Randabschnitt des quer zum Fahrzeug ausgerichteten Schenkels mit einem korrespondierenden Anbaublechteil verbunden wird und ein unter einem Winkel anschließender zweiter Randabschnitt des Schenkels wird an einer Abstützfläche des Federbeines des Aufbaublechteils verbunden. Der zum Schenkel abgewinkelte Steg der Verstärkungskonsole ist mit einer Abstützfläche des Aufbaublechteils an einem abgewinkelten Rand unter Bildung eines Hohlraumes verbunden. Zur Befestigung der Verstärkungskonsole mittels einer Punktschweißung sind die freien Kanten des Schenkels und des Stegs der Verstärkungskonsole am abgewinkelten Rand des Aufbaublechteils und an der Fläche des Aufbaublechteils aufliegend zur Befestigung verbunden.

Es ergibt sich aufgrund der Ausbildung des Aufbaublechteiles mit der Stirnwand des Fahrzeugs sowie mit dem Haubenträger und dem Längsträger der Plattform einerseits und der Verstärkungskonsole andererseits eine stabile Abstützung für das Federbein, zumal die Federbeinaufnahme zwischen der Verstärkungskonsole und der stabilen Stirnwand bzw. der A-Säule des Fahrzeugs angeordnet ist.

Ein Ausführungsbeispiel der Erfindung ist in den Zeichnungen dargestellt und wird im Folgenden näher beschrieben.

### Es zeigen:

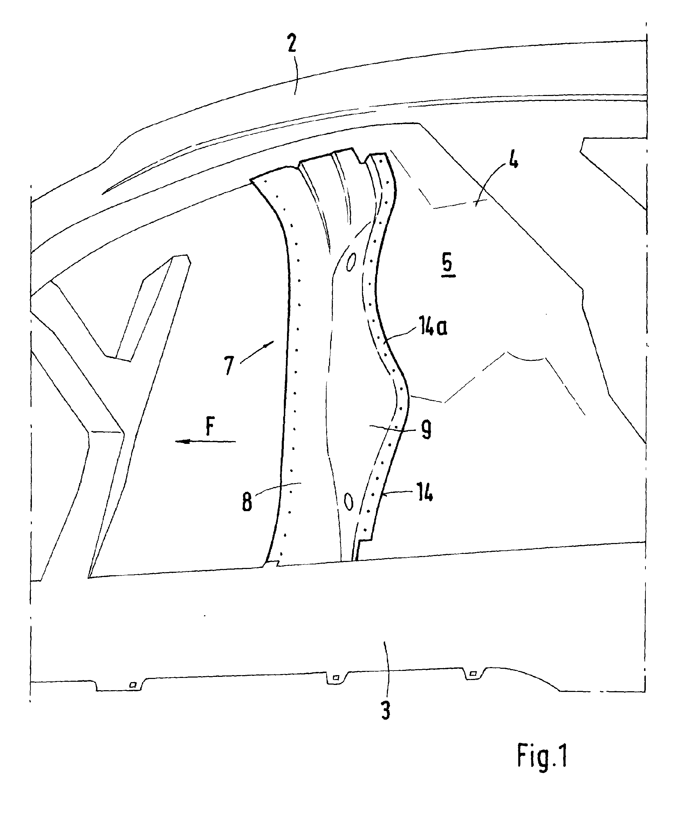

- Fig. 1.: eine schaubildliche Darstellung einer eingebauten Verstärkungskonsole zwischen einem Haubenträger und einem Längsträger einer Fahrzeugplattform an der linken Fahrzeugseite - in Bezug auf die Fahrtrichtung - gesehen,
- Fig. 2: eine weitere Ansicht der Verstärkungskonsole in einer Schrägansicht gemäß Fig. 1,

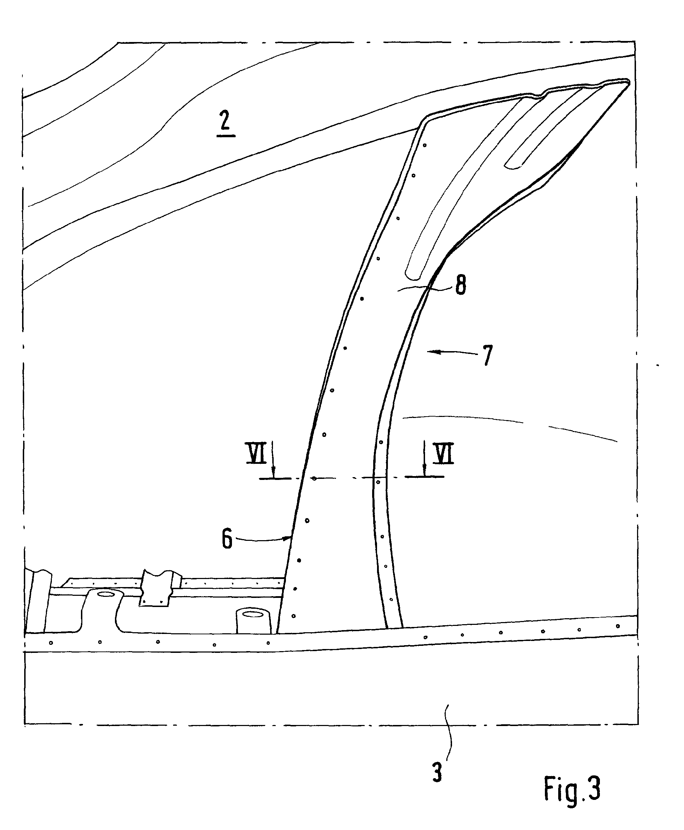

- Fig. 3: eine Seitenansicht auf das Fahrzeug mit Verstärkungskonsole,

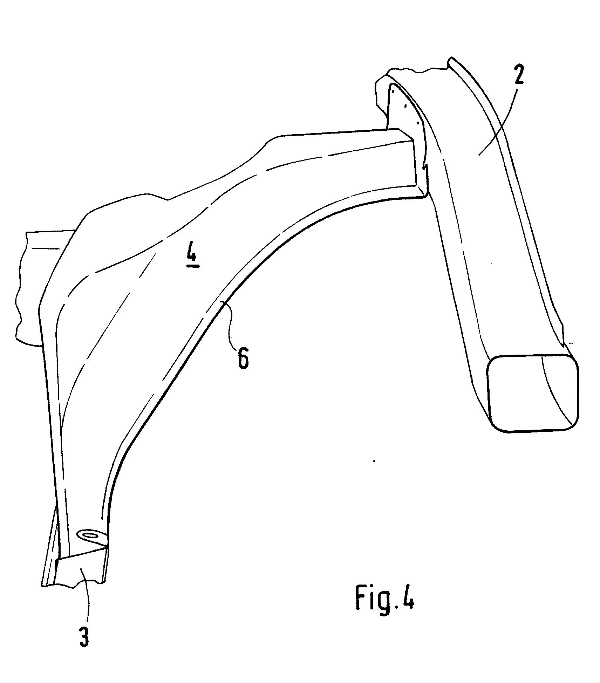

- Fig. 4: eine Ansicht von vorne auf das Aufbaublechteil,
- Fig. 5: eine Ansicht auf die Verstärkungskonsole in Pfeilrichtung Z der Fig. 2 gesehen,
- Fig. 6: einen Schnitt nach der Linie VI-VI der Fig. 3,
- Fig. 7: einen Schnitt nach der Linie VII-VII der Fig. 2 durch die Verstärkungskonsole und das Aufbaublechteil,
- Fig. 8: eine schaubildliche Darstellung der Verstärkungskonsole und

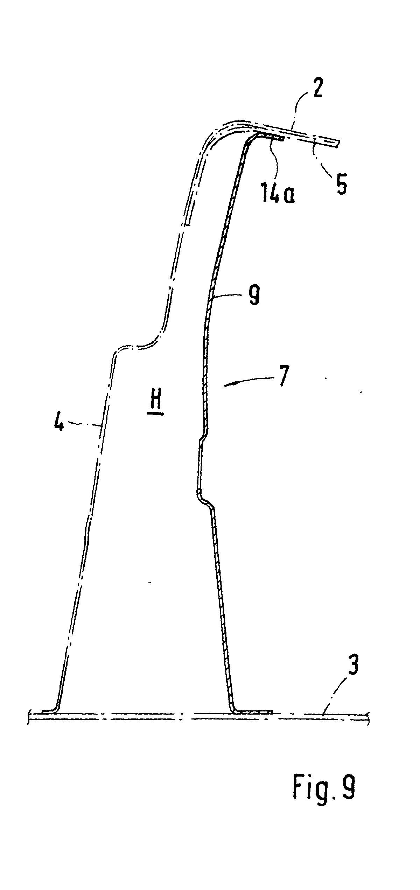

- Fig. 9: einen vertikalen Schnitt nach der Linie IX-IX der Fig. 2 durch die Versrtärkungskonsole und das Aufbaublechteil.

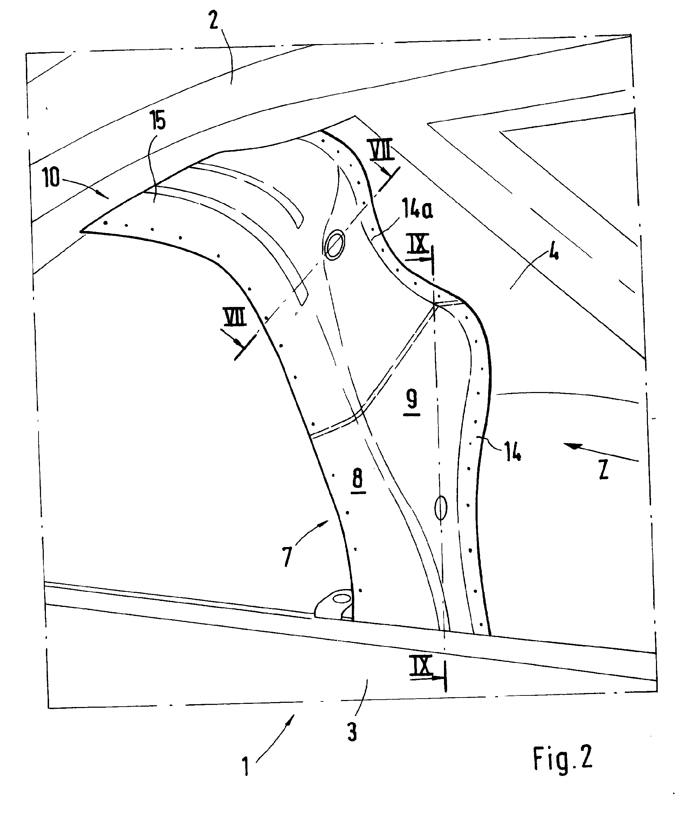

Ein Vorderwagen 1 eines Kraftfahrzeugs ist ausschnittsweise in Fig. 2 dargestellt und umfaßt im Wesentlichen einen oberen Haubenträger 2, einen unteren Längsträger 3 einer Fahrzeugplattform sowie ein Aufbaublechteil 4 eines Radhauses mit einer verstärkten Abstützfläche 5 für ein oberes Lager eines Federbeins, das nicht näher dargestellt ist.

Das Aufbaublechteil 4 ist zum einen mit einer Stirnwand bzw. einer A-Säule des Fahrzeugs und mit seinem vorderen Rand 6 - in Bezug auf die Fahrtrichtung F gesehen - mit einer Verstärkungskonsole 7 rundum verbunden.

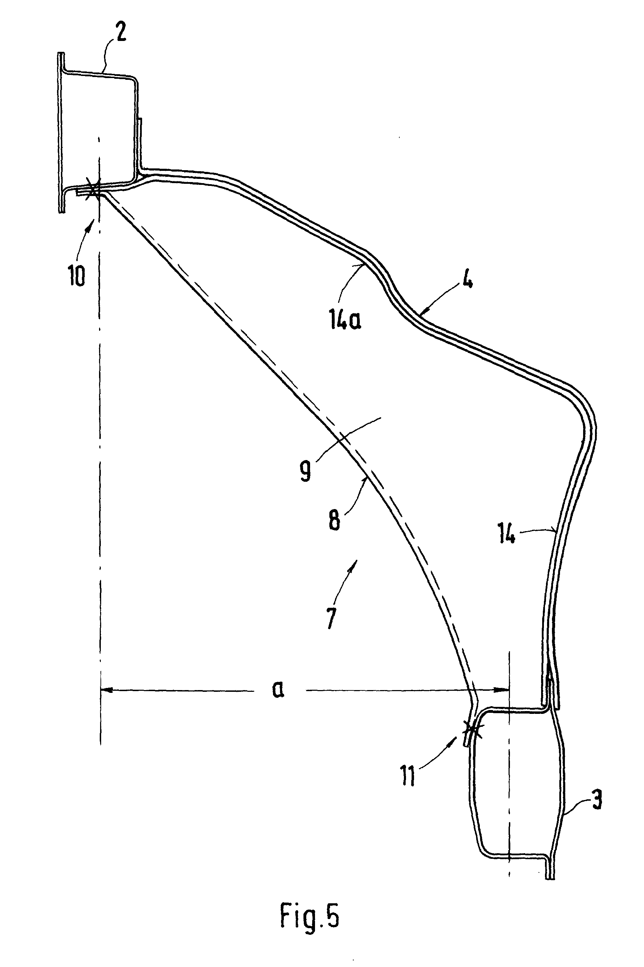

Die Verstärkungskonsole 7 ist zwischen den Trägern 2 und 3 angeordnet und besteht im Wesentlichen aus einem dreieckförmig geformten Blechteil mit einem Steg 8 und einem hierzu abgewickelten Schenkel 9. Dieser erstreckt sich quer zum Fahrzeug, wogegen der Steg 8 in Fahrzeuglängsrichtung ausgerichtet ist, das heißt, die Stegfläche ist etwa parallel zur Fahrzeuglängsmittenebene gelegen. Insgesamt ist die Konsole 7 quer gerichtet im Fahrzeug zwischen den Trägern 2 und 3 eingebaut, wobei sich wie Fig. 5 näher zeigt, das obere Ende 10 der Konsole 7 zum unteren Ende 11 der Konsole 7 um das Maß a nach innen zur Fahrzeuglängsmittenachse erstreckt, so daß sich eine optimale breite Abstützbasis in Querrichtung des Fahrzeugs ergibt.

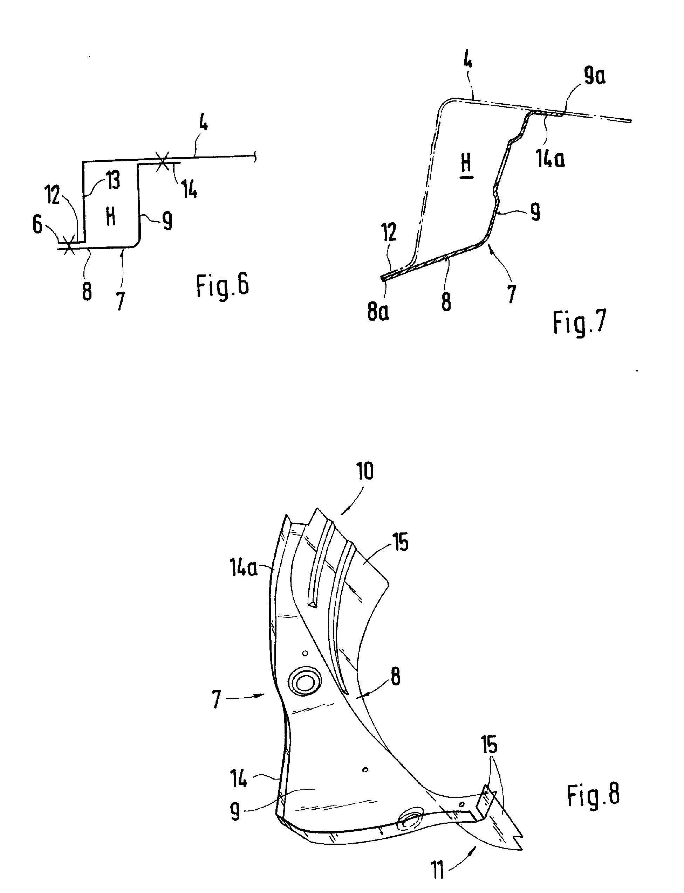

Das Aufbaublechteil 4 weist zur Verbindung mit der Verstärkungskonsole 7 einen abgestellten Rand 12 (Fig. 6) auf, dem sich ein abgewinkelter Schenkel 13 anschließt und mit dem Schenkel 9 der Verstärkungskonsole 7 einen Hohlträger (H) ergibt. Die Verbindung des Schenkels 9 der Verstärkungskonsole 7 mit dem Aufbaublechteil 4 erfolgt über randseitige Abstellungen 14, 14a.

Die Verbindung der Enden 10 und 11 der Verstärkungskonsole 7 mit den Trägern 2 und 3 erfolgt am oberen und unteren Ende 10, 11 über sogenannte Laschen 15 oder entsprechende Abstellungen, die mit den Flächen der Träger 2 und 3 verbindbar sind.

## Patentansprüche

1. Aufbaustruktur für ein Kraftfahrzeug mit einer vorderen Federbeinaufnahme in einem domförmig ausgebildeten Aufbaublechteil eines Radhauses, das eine obere Federbeinabstützung bildet, **dadurch gekennzeichnet, daß** am freiliegenden vorderen Rand (6) des Aufbaublechteils (4) der Federbeinaufnahme - in Bezug auf die Fahrtrichtung (F) gesehen - zwischen einem unteren Längsträger (3) einer Fahrzeugplattform und einem hierzu höhenversetzten Haubenträger (2) eine Verstärkungskonsole (7) angeordnet ist, die sich etwa vertikal und in Fahrzeugquerrichtung zwischen den beiden Trägern (2, 3) erstreckt und mit dem Aufbaublechteil (4) ein geschlossenes Hohlträgerprofil (H) mit einem polygonalen Querschnitt bildet.

2. Aufbaustruktur nach Anspruch 1, **dadurch gekennzeichnet, daß** die Verstärkungskonsole (7) U-profilförmig ausgebildet ist und einen in Fahrzeuglängsrichtung weisenden Steg (8) mit parallel und in Fahrzeugquerrichtung verlaufenden Schenkeln (9) aufweist.

3. Aufbaustruktur nach Anspruch 1, **dadurch gekennzeichnet, daß** die Verstärkungskonsole (7) winkelförmig ausgebildet ist und einen in Fahrzeuglängsrichtung weisenden Steg (8) mit einem abgewinkelten und in Fahrzeugquerrichtung verlaufenden Schenkel (9) aufweist.

4. Aufbaustruktur nach den Ansprüchen 1 oder 3, **dadurch gekennzeichnet, daß** die Verstärkungskonsole (7) etwa dreieckförmig ausgebildet ist und sich in einer Einbaulage mit einem ersten etwa vertikalen Randabschnitt (14) des quer zum Fahrzeug ausgerichteten Schenkels (9) am korrespondierenden Aufbaublechteil (4) und mit einem unter einem Winkel anschließenden zweiten Randabschnitt (14a) mit einer Abstützfläche (5) des Federbeines im Aufbaublechteil (4) verbunden ist und der zum Schenkel (9) abgewinkelte Steg (8) mit einem zur Abstützfläche des Aufbaublechteils (4) abgewickelten Rand (12) unter Bildung des Hohlraumes (H) verbunden ist.

5. Aufbaustruktur nach den Ansprüchen 1, 3 oder 4, **dadurch gekennzeichnet, daß** die freien Kanten (9a, 9b) des Schenkels (9) und des Stegs (8) der Verstärkungskonsole (7) mit dem abgewinkelten Rand (12) und dem Aufbaublech (4) zur Befestigung verbunden sind.

6. Aufbaustruktur nach einem oder mehreren der vorhergehenden Ansprüche, **dadurch gekennzeichnet, daß** die freistehenden Enden (10, 11) der Verstärkungskonsole (7) am Steg (8) sowie am Schenkel (9) Randabstellungen, Laschen (15) oder dgl. aufweisen, die jeweils mit den Trägern (2, 3) verbindbar sind.

7. Aufbaustruktur nach einem oder mehreren der vorhergehenden Ansprüche, **dadurch gekennzeichnet, daß** die obere Federbeinlagerung zwischen einer Stirnwand des Fahrzeugs und der Verstärkungskonsole (7) angeordnet ist, wobei die Verstärkungskonsole (7) mit den in Querrichtung sowie in Höhenrichtung versetzt zueinander angeordneten Träger (2, 3) verbunden ist.
